# EUROPÄISCHE PATENTSCHRIFT

(11) **EP 0 879 573 B1**
(45) Veröffentlichungstag und Bekanntmachung des Hinweises auf die Patenterteilung: **27.02.2002**
(21) Anmeldenummer: 98105492.7
(22) Anmeldetag: 26.03.1998
(51) Int. Cl.: A47H 1/144

(54) **Befestigungselement für eine Profilschiene**
Fastening element for a metal rail
Elément de fixation pour un rail profilé

(30) Priorität: 23.05.1997 DE 29709086 U
(43) Veröffentlichungstag der Anmeldung: 25.11.1998
(73) Patentinhaber: MHZ HACHTEL GmbH & Co. KG, D-70771 Leinfelden-Echterdingen (DE)
(72) Erfinder: Fetsch, Rudolf, Dr., 97990 Weikersheim (DE); Frank, Richard, 97996 Niederstetten (DE)
(74) Vertreter: Möbus, Daniela, Dr.-Ing.

(56) Entgegenhaltungen:
- FR-A- 2 481 097
- US-A- 3 927 437
- US-A- 4 179 091
- US-A- 5 060 710

## Beschreibung

Die Erfindung betrifft ein Befestigungselement für eine Profilschiene in Form einer federnd elastischen Klammer.

Profilschienen, insbesondere Vorhangschienen, werden heute in der Regel direkt mit einer Decke oder Wand verschraubt. Da die Schienenstücke meist sehr lang sind und während des Verschraubens gegen die Decke oder die Wand gepreßt werden müssen, ist die Montage solcher Schienen bisher relativ umständlich. Häufig ist sie außerdem nur mit Hilfe einer zweiten Person durchführbar.

Zur Abhilfe dieses Problems schlägt die vorliegende Erfindung ein Befestigungselement für eine Profilschiene in Form einer federnd elastischen Klammer vor, die mindestens eine Schmalseite der Schiene umschließt und an einer Wand oder Decke befestigbar ist, wobei ein Ende der Klammer in eine hinterschnittene öffnung oder Nut auf der Oberseite der Schiene einführbar und das zweite Ende über die Unterkante der Schienenschmalseite clipsbar ist. Die erfindungsgemäßen Befestigungselemente können vormontiert werden, was keinerlei Problem darstellt und auch von einer Person allein durchgeführt werden kann. Anschließend werden die einen Enden der Befestigungselemente in die öffnungen oder Nuten auf der Oberseite der Schiene eingeführt und dann durch Andrücken der Schiene die zweiten Enden der Befestigungselemente über die Unterkante der Schmalseite der Schienen geclipst. Mit Hilfe der erfindungsgemäßen Befestigungsclips ist somit die Montage von Profilschienen ohne Anstrengung und auch von einer Person allein durchführbar. Zweckmäßigerweise können die Befestigungselemente mittels Schrauben an einer Wand oder Decke befestigbar sein. Dabei kann mindestens der die Schmalseite der Schiene übergreifende Teil des Befestigungselementes eine nutartige Vertiefung zur Aufnahme eines Schraubenkopfes aufweisen, so daß dieser bei der Montage der Schiene nicht stört. Das über die Unterkante der Schmalseite clipsbare Ende des Befestigungselementes kann auch nach unten abgebogen sein, um ein Wiederlösen der Verbindung zwischen Befestigungselement und Schiene zu ermöglichen, falls die Schiene einmal wieder abgenommen werden soll. Zweckmäßigerweise kann das Befestigungselement aus Federstahl gebogen sein. Aber auch der Einsatz anderer federnder Materialien ist möglich.

Nachfolgend wird ein bevorzugtes Ausführungsbeispiel eines erfindungsgemäßen Befestigungselementes anhand der Zeichnung näher erläutert.

Es zeigen:
- Fig. 1: einen zentralen Längsschnitt durch ein Befestigungselement entlang der Linie I - I in Fig. 2;
- Fig. 2: eine Ansicht von oben auf das Befestigungselement in Fig. 1;
- Fig. 3: eine Seitenansicht auf das Befestigungselement aus Fig. 1.

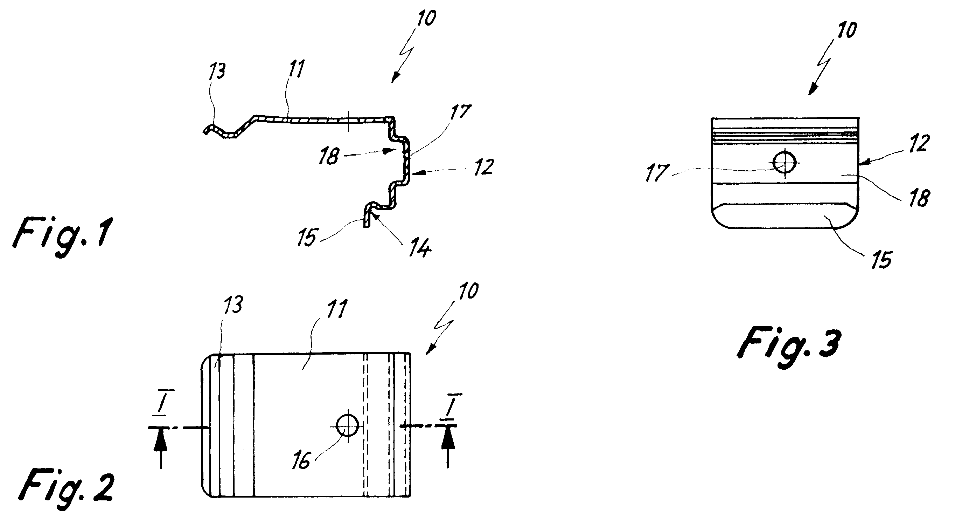

Das in den Fig. 1 bis 3 gezeigte Befestigungselement 10 ist eine aus Federstahl gebogene Klammer mit einem Oberteil 11, das auf der Oberseite einer nicht dargestellten Profilschiene aufliegt, und einem Seitenteil 12, das parallel zu einer Schmalseite einer Profilschiene verläuft. Das freie Ende 13 des Oberteiles 11 ist schaufelförmig nach unten abgebogen und kann von oben in eine hinterschnittene öffnung oder Nut einer Profilschiene eingeführt werden. Das zweite Ende 14 des Befestigungselementes 10 ist zweifach rechtwinklig abgebogen und umschließt die Unterkante der Schmalseite der Profilschiene und ragt anschließend senkrecht nach unten, um eine Lasche 15 zu bilden, an der das Befestigungselement 10 wieder von der Profilschiene zu lösen ist. Das Befestigungselement 10 weist sowohl in seinem Oberteil 11 als auch im Seitenteil 12 Bohrungen 16, 17 für Befestigungsschrauben auf, so daß es sowohl an einer Decke als auch an einer Wand befestigbar ist. Die Bohrung 17 ist dabei in einer nutförmigen Vertiefung 18 im Seitenteil 12 angeordnet, in der der Kopf einer Schraube vollständig versenkt werden kann. Die Maße des Befestigungsclips 10 sind vorzugsweise derart auf die zu befestigende Profilschiene abgestimmt, daß es die Schmalseite der Schiene klemmend umschließt. Nach Montage des Befestigungselementes 10 an der Wand oder einer Decke wird das Ende 13 von oben in die hinterschnittene Nut oder Öffnung der Schiene eingeführt und anschließend das zweite Ende 14 durch Andrücken der Schiene über die Unterkante der Schmalseite der Profilschiene geclipst.

## Patentansprüche

1. Befestigungselement für eine Profilschiene in Form einer federnd elastischen Klammer, die mindestens eine Schmalseite der Schiene umschließt und an einer Wand oder Decke befestigbar ist, wobei ein Ende (13) der Klammer in eine hinterschnittene öffnung oder Nut auf der Oberseite der Schiene einführbar und das zweite Ende (14) über die Unterkante der Schienenschmalseite clipsbar ist.

2. Befestigungselement nach Anspruch 1, **dadurch gekennzeichnet, daß** es mittels Schrauben an einer Wand oder Decke befestigbar ist.

3. Befestigungselement nach Anspruch 2, **dadurch gekennzeichnet, daß** mindestens der die Schmalseite der Schiene umschließende Teil (12) des Befestigungselementes (10) eine nutartige Vertiefung (18) zur Aufnahme eines Schraubenkopfes aufweist.

4. Befestigungselement nach einem der Ansprüche 1 bis 3, **dadurch gekennzeichnet, daß** das über die Unterseite der Schmalseite der Schiene clipsbare Ende (14) nach unten abgebogen ist, um ein Losen der Verbindung zwischen Befestigungselement (10) und Schiene zu ermöglichen.

5. Befestigungselement nach einem der Ansprüche 1 bis 4, **dadurch gekennzeichnet, daß** es aus Federstahl gebogen ist.

## Claims

1. Fastening element for a profile rail in the form of a resilient elastic clamp which surrounds at least one narrow side of the rail and which is mountable to a wall or ceiling, and one end (13) of the clamp is insertible into an undercut opening or groove at the top of the rail, and the second end (14) can be clipped over the lower edge of the narrow side of the rail.

2. Fastening element according to Claim 1, **characterised in that** it is mountable to a wall or ceiling by means of bolts.

3. Fastening element according to Claim 2, **characterised in that** at least the portion (12) of the fastening element (10) which surrounds the narrow side of the rail comprises a groovelike recess (18) for accommodation of a bolthead.

4. Fasening element according to one of Claims 1 to 3, **characterised in that** the end (14) which can be clipped over the lower side of the narrow side of the rail is downwardly bent in order to allow a release of the connection between fastening element (10) and the rail.

5. Fastening element according to one of Claims 1 to 4, **characterised in that** it is bent of spring steel.

## Revendications

1. Élément de fixation pour un rail profilé en forme d'attache élastique qui entoure au moins un côté étroit du rail et peut être fixé à un mur ou à un plafond, une extrémité (13) de l'attache pouvant être introduite dans une ouverture ou une gorge en contre-dépouille sur le dessus du rail, et la deuxième extrémité (14) pouvant être clipsée par-dessus l'arête inférieure du côté étroit du rail.

2. Élément de fixation selon la revendication 1, **caractérisé en ce qu'**il peut être fixé au mur ou au plafond au moyen de vis.

3. Élément de fixation selon la revendication 2, **caractérisé en ce qu'**au moins la partie (12) de l'élément de fixation (10) entourant le côté étroit du rail comporte un renfoncement en forme de rainure (18) pour recevoir une tête de vis.

4. Élément de fixation selon l'une des revendications 1 à 3, **caractérisé en ce que** l'extrémité (14) clipsable par-dessus le dessous du côté étroit du rail est repliée vers le bas pour permettre un détachement de l'élément de fixation (10) et du rail.

5. Élément de fixation selon une des revendications 1 à 4, **caractérisé en ce qu'**il est en acier souple plié.
